# EUROPÄISCHE PATENTSCHRIFT

(11) **EP 2 945 562 B1**
(45) Veröffentlichungstag und Bekanntmachung des Hinweises auf die Patenterteilung: **10.04.2019**
(21) Anmeldenummer: 13811539.9
(22) Anmeldetag: 19.12.2013
(51) Int. Cl.: A61C 3/02

(54) **SCHAFT EINES DENTALWERKZEUGS**
SHAFT OF A DENTAL TOOL
TIGE D'UN INSTRUMENT DENTAIRE

(30) Priorität: 21.01.2013 DE 102013000956
(43) Veröffentlichungstag der Anmeldung: 25.11.2015
(73) Patentinhaber: Gebr. Brasseler GmbH & Co. KG, 32657 Lemgo (DE)
(72) Erfinder: KIRSCH, Axel, 70184 Stuttgart (DE); DÜRR, Walter, 75196 Remchingen-Nöttingen (DE); BRINKMANN, Volker, 32657 Lemgo (DE); DANGER, Karl-Heinz, 32758 Detmold (DE)
(74) Vertreter: Hoefer & Partner Patentanwälte mbB
(86) Internationale Anmeldenummer: PCT/EP2013/077516
(87) Internationale Veröffentlichungsnummer: WO 2014/111227

(56) Entgegenhaltungen:
- WO-A1-2009/014746
- WO-A1-2009/014746
- GB-A- 252 343
- GB-A- 1 554 006
- US-A- 5 017 137
- US-A- 5 105 690
- US-A1- 2008 050 698

## Beschreibung

Die Erfindung betrifft einen Schaft eines Dentalwerkzeugs, welcher in eine Antriebseinrichtung, beispielsweise ein Winkelstück, einspannbar ist.

Der Schaft eines Dentalwerkzeugs dient dazu, das Dentalwerkzeug (beispielsweise einen Bohrer oder Ähnliches) lösbar so an einem Winkelstück zu befestigen, dass insbesondere eine Drehmomentübertragung gesichert ist. Weiterhin dient der Schaft dazu, das Dentalwerkzeug exakt zu führen und bei einer Rotation des Dentalwerkzeugs um seine Mittelachse eine zentrierte, laufruhige Bewegung des Dentalwerkzeugs sicherzustellen. Der Schaft muss so ausgebildet sein, dass ein leichtes, einfaches Einsetzen des Schaftes in die Antriebsvorrichtung, beispielsweise das Winkelstück, möglich ist und das Dentalwerkzeug in analoger Weise einfach wieder entnommen werden kann. Dabei ist insbesondere zu berücksichtigen, dass der Benutzer, beispielsweise ein Zahnarzt, im Operations- oder Präparationsumfeld das Einnehmen und Entnehmen des Schaftes einfach bewerkstelligen kann.

Aus dem Stand der Technik sind Schaftkonstruktionen nach ISO-1797 vorbekannt. Dies sind die üblicherweise verwendeten Ausgestaltungen. Dabei weist der Schaft an seinem distalen Endbereich eine Abplattung auf, welche sich in formschlüssigem Einsatz mit einer entsprechenden Kraftübertragungsfläche des Antriebs-Mechanismus befindet. Zusätzlich kann der Schaft an seinem distalen Endbereich mit einer Ausnehmung oder Ringnut oder ähnlichem versehen sein, um eine Axialsicherung bereitzustellen.

Die US 5 017 137 beschreibt ein Wurzelkanalinstrument, welches einen Einspannschaft aufweist, an welchem ein Hals befestigt ist, der an seinem freien Ende einen Arbeitskopf trägt. Der hinterste Bereich des Einspannschaftes ist mit Mitteln zur Drehmomentübertragung ausgestattet und ist deshalb abgeplattet.

Aus der GB 252 343 A ist eine Halterung für ein drehbares medizinisches oder chirurgisches Instrument bekannt, bei welcher ein konischer Vierkant in eine passende Ausnehmung am Schaftbereich des Werkzeugs einsteckbar ist.

Aus der WO 2009/014746 A1 ist eine Schraubenhalterung für eine Knochenschraube bekannt. Diese weist einen Einspannschaft auf, welcher benachbart zu seinem distalen Endbereich mit einem zur Drehmomentübertragung geeigneten Mehrkantprofil versehen ist.

Die GB 1 554 006 A beschreibt einen Handgriff, in welchen ein drehbares Dentalwerkzeug einsteckbar ist.

Ferner zeigen die US 2008/0050698 A1 und WO 2009/014746 A1 einen Schaft eines Dentalwerkzeugs mit einem distalen Endbereich, mit einem an dem distalen Endbereich angrenzenden zylindrischen Schaftbereich sowie mit einem dem distalen Endbereich gegenüberliegenden, proximalen Endbereich.

Der Erfindung liegt die Aufgabe zugrunde, einen Schaft der eingangs genannten Art zu schaffen, welcher bei einfachem Aufbau und einfacher, kostengünstiger Herstellbarkeit eine hohe Betriebssicherheit und Funktionalität aufweist.

Erfindungsgemäß wird die Aufgabe durch die Merkmalskombination des Anspruches 1 gelöst, die Unteransprüche zeigen weitere vorteilhafte Ausgestaltungen der Erfindung.

Erfindungsgemäß ist somit der Schaft eines Dentalwerkzeugs geschaffen, welcher einen distalen Endbereich sowie einen an dem distalen Endbereich angrenzenden zylindrischen Schaftbereich umfasst. Gegenüberliegend zu dem distalen Endbereich ist an dem Schaft ein proximaler Endbereich ausgebildet, an welchem sich das Dentalwerkzeug anschließt. Der Schaft kann mit dem Dentalwerkzeug einstückig verbunden sein, wobei das Dentalwerkzeug aus demselben Werkstoff wie der Schaft gefertigt sein kann oder mittels eines Fügeverfahrens unterschiedliche Werkstoffe verbunden werden können.

Erfindungsgemäß ist weiterhin vorgesehen, dass der proximale Endbereich mit einem Mehrkantprofil versehen ist. Es ist erfindungsgemäß vorgesehen, dass sich das Mehrkantprofil in Richtung des distalen Endbereichs konisch verjüngt.

Durch die erfindungsgemäße Ausgestaltung des Schaftes ergeben sich eine Vielzahl von Vorteilen. Während bei den aus dem Stand der Technik bekannten Schaftkonstruktionen die Drehmomenteinleitung an dem distalen Endbereich stattfindet, ist erfindungsgemäß vorgesehen, dass das Mehrkantprofil, durch welches das Drehmoment von dem Antriebselement (Winkelstück) eingeleitet wird, in Form eines Mehrkantprofils ausgebildet ist, welches direkt an den Werkzeugteil angrenzt. Hierdurch ergibt sich der entscheidende Vorteil, dass die wirksame Länge des Schaftes, welche auf Torsion beansprucht wird, minimiert ist. Somit erfolgt die Drehmomenteinleitung direkt angrenzend an das Werkzeugteil, während der restliche Schaft nicht auf Torsion beansprucht wird. Er dient lediglich zur Führung und Zentrierung des Werkzeugteils bzw. des Dentalwerkzeugs und zur axialen Fixierung.

Der erfindungsgemäße Schaft kann somit in effektiver Weise in einen Antriebsmechanismus eingesetzt werden, um das Antriebselement oder Drehmoment auf das Dentalwerkzeug zu übertragen. Dabei ergibt sich ein weiterer Vorteil hinsichtlich der auf den Schaft einwirkenden Biegekräfte. Da ein derartiger Schaft stets mit einem gewissen Spiel in dem Antriebselement gelagert ist, ergeben sich bei den aus dem Stand der Technik bekannten Konstruktionen zusätzlich zu den Torsionsmomenten auch Biegekräfte, die eine exakte Zentrierung des Werkzeugsteils nicht immer gewährleisten. Diese Biegekräfte führen zu einem Unrundlaufen des Werkzeugteils und damit zu einer geringeren Präzision der Bohrfunktion oder Schneidfunktion des Werkzeugteils. Insbesondere bei Implantatbettbohrern kann sich dies negativ auswirken, da die gebohrten Löcher unrund werden können, so dass ein Implantat nicht den gewünschten festen Sitz hat. Erfindungsgemäß werden die Biegekräfte minimiert, da eine Drehmomentübertragung direkt benachbart an das Werkzeugteil erfolgt.

Ein weiterer, wesentlicher Vorteil der vorliegenden Erfindung besteht darin, dass das Mehrkantprofil durch seine konische Verjüngung einen spielfreien Sitz in dem Antriebsmechanismus gewährleistet. Somit ist der Schaft selbstzentriert und spielfrei in dem Antriebselement aufgenommen. Insbesondere bei Rotationen in unterschiedlichen Drehrichtungen oder bei unterschiedlichen Belastungen während des axialen Vorschubs des Dentalwerkzeugs erfolgt somit eine spielfreie, sichere Fixierung. Zusätzlich zu der sicheren Fixierung ergibt sich der Vorteil, dass die konische Form zu einer Klemmung in Axialrichtung führt, so dass das Mehrkantprofil nicht nur hinsichtlich der Drehmomentübertragung, sondern auch hinsichtlich der Axialsicherung wirksam ist. Durch die erfindungsgemäße Konstruktion weist der Schaft somit ein deutlich höheres polares Widerstandsmoment auf. Dieses ist im Vergleich zu den aus dem Stand der Technik bekannten Schaftkonstruktionen um bis zu 84% höher. Bei einem Mehrkantprofil, welches als Sechskant mit einer Schlüsselweite von 2,5 mm ausgebildet ist, ergibt sich beispielsweise ein polares Widerstandselement von 2,94 mm³. Falls der Schaft mit einer zentrischen Bohrung zur Innenkühlung versehen ist, ergibt sich ein polares Widerstandsmoment von ca. 2,5 mm³.

Das erfindungsgemäße, sich konisch verjüngende Mehrkantprofil weist beispielsweise eine konische Einhüllende auf, auf welcher die Kanten zwischen den benachbarten Abflachungen des Mehrkantprofils liegen. Somit sind erfindungsgemäß die Flanken des Mehrkantprofils bevorzugt zur Mittelachse des Schafts geneigt angeordnet.

Wie erwähnt, kann das erfindungsgemäße Mehrkantprofil als Sechskantprofil ausgebildet sein. Es ist jedoch auch möglich, andere zur Mittelachse (Rotationsachse, Drehachse) symmetrische Profile vorzusehen, beispielsweise ein Zwölfkantprofil oder ein Achtkantprofil.

Durch die Erfindung wird weiterhin die Möglichkeit geschaffen, die Gesamtlänge des Schaftes deutlich zu reduzieren. Da die Drehmomenteinleitung direkt angrenzend an das Werkzeugteil erfolgt, muss die restliche Schaftlänge lediglich so groß sein, dass der Schaft insgesamt rotationssymmetrisch zu seiner Mittelachse gelagert wird. Dies kann, abhängig von der Dimensionierung, auch mit einem sehr kurzen Schaft erfolgen, welcher deutlich kürzer ist, als die aus dem Stand der Technik bekannten Schaftlängen.

Erfindungsgemäß kann der Werkzeugteil, wie erwähnt, in Form eines Implantatbettbohrers ausgebildet sein. Es ist erfindungsgemäß jedoch auch möglich, andere Bohrerformen zu realisieren. Auch weitere andere Formen des Werkzeugteils sind möglich, beispielsweise Fräser, Senker, Gewindeschneider oder Schleifwerkzeuge. In besonders günstiger Ausgestaltung der Erfindung kann der Schaft auch mit einem im Wesentlichen rohrförmigen Verlängerungsansatz versehen sein, welcher das Werkzeugteil bildet. Dabei ergibt sich die Möglichkeit, mittels des Schaftes eine Bohrerverlängerung zu realisieren. Bevorzugterweise weist der rohrförmige Verlängerungsansatz an seinem freien Endbereich eine Innenkontur auf, deren Form passend zu dem sich konisch verjüngenden Mehrkantprofil ausgebildet ist. Somit kann in die Bohrerverlängerung ein weiterer Schaft eines Dentalwerkzeugs eingesteckt werden. Auch hierbei ergeben sich insbesondere die oben genannten Vorteile im Hinblick auf die spielfreie Lagerung und die hohe Torsionsfestigkeit.

Erfindungsgemäß kann das Mehrkantprofil entweder über seine gesamte Länge konisch ausgebildet sein oder lediglich über einen Teil seiner axialen Länge konisch sein.

Hinsichtlich der Herstellung des erfindungsgemäßen Schaftes ergeben sich weitere Vorteile. Da das Mehrkantprofil im Wesentlichen rotationssymmetrisch zur Mittelachse ausgebildet ist, ergibt sich die Möglichkeit, den gesamten Schaft mittels eines Drehvorganges herzustellen. Es ist nicht erforderlich, asymmetrische Fräsvorgänge oder ähnliches einzusetzen, so wie dies beim Stand der Technik erforderlich ist. Auch dies führt zu einer höheren Präzision des erfindungsgemäßen Schaftes.

Weiterhin ist es erfindungsgemäß möglich, geeignete Materialien für den Schaft zu verwenden, beispielsweise gehärtete oder ungehärtete Stähle. Da das Mehrkantprofil mechanisch weit geringer belastet wird, als die aus dem Stand der Technik bekannte Abflachung zur Übertragung des Drehmoments, stellen sich hinsichtlich des Verschleißes geringere Anforderungen.

Die auf den Schaft wirkende Torsion ist somit abhängig von der wirksamen Länge des Schaftes zwischen dem Bereich der Drehmomenteinbringung und dem Bereich, an welchem die Schnittkräfte wirken. Da die Drehmomenteinbringung erfindungsgemäß proximal zu dem Werkzeugteil erfolgt, ist die wirksame Schaftlänge, welche auf Torsion beansprucht wird, weitaus geringer. In gleicher Weise wirkt sich die Schaftlänge auf die seitliche Auslenkung und somit auf den Schlag eines Instruments aus. Die erfindungsgemäße Lösung führt somit zu einer verbesserten statischen und dynamischen Anordnung. Dabei ist auch zu berücksichtigen, dass bei einem Bohren von Hand sowohl Axialkräfte als auch seitliche Kräfte aufgebracht werden. Die seitlichen Kräfte führen durch die erfindungsgemäße Konstruktion zu einer geringeren Auslenkung und damit zu einer größeren Präzision des Bearbeitungsvorganges.

Bei der Ausgestaltung des erfindungsgemäßen Werkzeugteils in Form eines Implantatbettbohrers wirken sich die verbesserte Rundlaufgenauigkeit und das größere polare Widerstandsmoment besonders vorteilhaft aus. Antriebe für Implantatbettbohrer sind üblicherweise mit einer Drehmomentbegrenzung ausgestattet. Somit kann es vorkommen, dass während der chirurgischen Anwendung der Antrieb mehrfach abschaltet und wieder anschaltet. Dies resultiert in Schwingungen, sowie in Verformungen im plastischen Bereich des Werkstoffs. Die erfindungsgemäße Ausgestaltung des Schaftes zeichnet sich hierbei durch eine erheblich erhöhte Festigkeit aus. Dies führt zu einer höheren Präzision des Bearbeitungsvorganges. Dabei ist weiterhin zu berücksichtigen, dass der Implantatbettbohrer sich in der ungleichmäßigen Knochenstruktur eines Patienten verharken kann. Hierdurch treten Spannungsspitzen auf, die Frakturen am Bohrer möglich machen. Erfindungsgemäß treten die Spannungsspitzen angrenzend an das Mehrkantprofil auf, so dass der Rest des Schafts nicht betroffen ist. Sollte es somit zu einer Fraktur des Bohrers kommen, so kann der verbleibende Schaft in einfacher Weise aus dem Winkelstück entnommen werden. Dies ist bei den aus dem Stand der Technik bekannten Konstruktionen nicht möglich.

Im Folgenden wird die Erfindung anhand von Ausführungsbeispielen in Verbindung mit der Zeichnung beschrieben. Dabei zeigt:
- Fig. 1: eine schematische Seitenansicht eines ersten Ausführungsbeispiels des erfindungsgemäßen Schaftes,
- Fig. 2: eine Schnittansicht durch das Mehrkantprofil,
- Fig. 3: ein Ausführungsbeispiel, bei welchem das Werkzeugteil als Schaftverlängerung ausgebildet ist,
- Fig. 4: eine Seitenansicht, analog Fig. 3, mit eingesetztem weiteren Schaft,
- Fig. 5 und 6: Darstellungen analog den Fig. 3 und 4 in geänderter Ausgestaltung des Werkzeugteils als Schaftverlängerung, und
- Fig. 7 und 8: Stellungen analog den Fig. 1 und 2 eines Ausführungsbeispiels mit Innenkühlung.

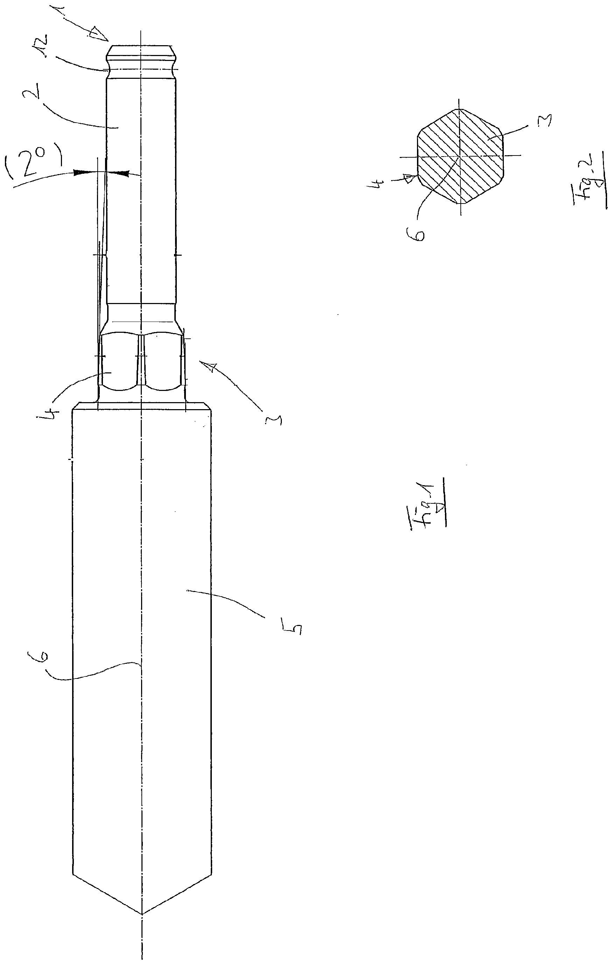

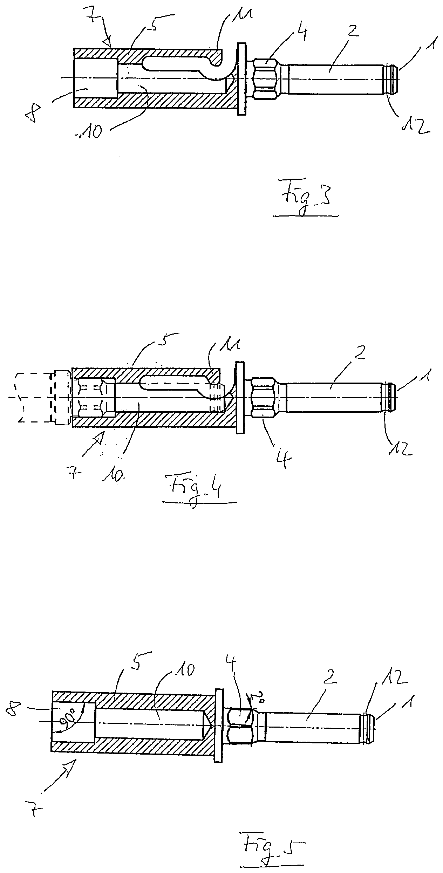

Die Fig. 1 zeigt einen erfindungsgemäßen Schaft, welcher einen distalen Endbereich 1 aufweist. An diesen schließt sich einstückig ein zylindrischer Schaftbereich 2 an. Dieser wiederum geht in einen proximalen Endbereich 3 über. Der proximale Endbereich 3 ist als Mehrkantprofil ausgebildet. Bei dem in Fig. 1 gezeigten Ausführungsbeispiel handelt es sich um ein Sechskantprofil, so wie dieses in Fig. 2 dargestellt ist. An das Mehrkantprofil 4 schließt sich ein Werkzeugteil 5 an. Der Werkzeugteil 5 ist beispielsweise in Form eines Implantatbettbohrers ausgebildet, so wie dies aus dem Stand der Technik bekannt ist, oder in Form einer Schaftverlängerung (Verlängerungsansatz) 7, so wie dies im Zusammenhang mit den Fig. 3 bis 6 nachfolgend beschrieben wird.

Das Mehrkantprofil ist bei dem Ausführungsbeispiel der Fig. 1 und 2 über seine gesamte Länge konisch ausgebildet, wobei ein Konuswinkel von 2° vorgesehen ist.

Das Bezugszeichen 6 bezeichnet die Mittelachse oder Drehachse.

Das Ausführungsbeispiel zeigt, dass der Durchmesser des zylindrischen Schaftbereichs 2 geringer sein kann, als der Durchmesser des Mehrkantprofils, da der zylindrische Schaftbereich 2 nicht zur Drehmomentübertragung dient. Entsprechend kann der Übergangsbereich zwischen dem Mehrkantprofil 4 und dem Werkzeugteil 5 im Durchmesser groß dimensioniert werden, um ein hohes Widerstandsmoment aufzuweisen. Das Mehrkantprofil 4 schließt sich direkt an das Werkzeugteil 5 an.

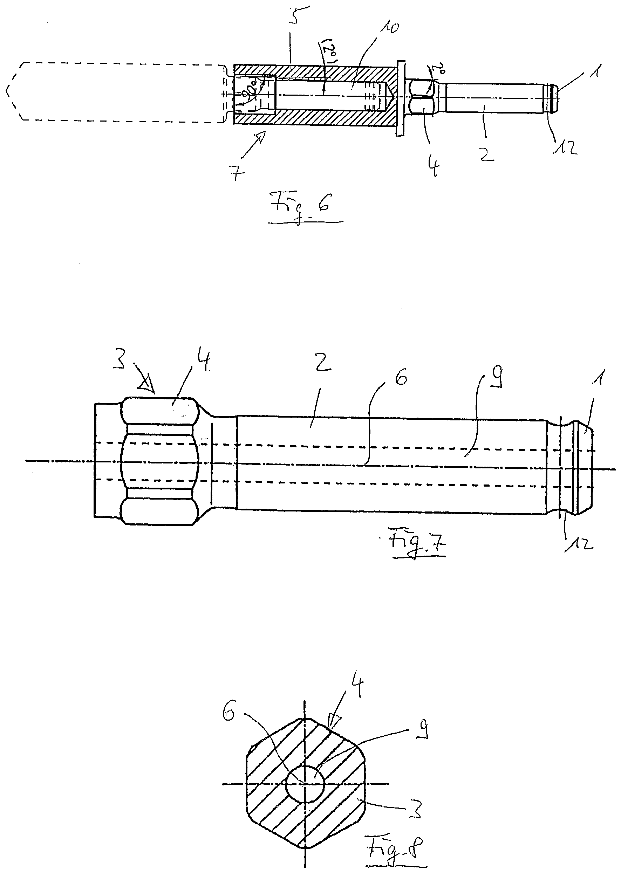

Die Fig. 7 und 8 zeigen eine ähnliche Ausgestaltung wie die Fig. 2 und 3. Zusätzlich ist ein zentrischer Kühlkanal 9 vorgesehen.

Bei dem Ausführungsbeispiel der Fig. 3 bis 6 ist der Werkzeugteil 5 jeweils als rohrförmige Schaftverlängerung ausgebildet. Die restlichen Ausgestaltungen des Schaftes sind jeweils im Wesentlichen gleich wie bei dem Ausführungsbeispiel der Fig. 1 und 2. Die Schaftverlängerung weist eine zentrische Ausnehmung 10 auf, in welche ein weiterer Schaft einsteckbar ist, so wie dies in den Fig. 4 und 6 gezeigt ist. An dem freien Ende ist die zentrische Ausnehmung 10 mit einer Innenkontur 8 versehen, welche ebenfalls in Form eines konischen Mehrkantprofils passend zu dem Mehrkantprofil 4 ausgebildet ist. Bei dem Ausführungsbeispiel der Fig. 3 und 4 ist ein elastisches Rastelement 11 vorgesehen, welcher beispielsweise aus der DE 20 2008 017 281 U1 vorbekannt ist.

Bei allen Ausführungsbeispielen ist am distalen Endbereich 1 eine Ringnut 12 vorgesehen, welche zur zusätzlichen Axialsicherung dient.

### Bezugszeichenliste

- 1: distaler Endbereich
- 2: zylindrischer Schaftbereich
- 3: proximaler Endbereich
- 4: Mehrkantprofil
- 5: Werkzeugteil
- 6: Mittelachse
- 7: Schaftverlängerung (Verlängerungsansatz)
- 8: Innenkontur
- 9: zentrischer Kühlkanal
- 10: zentrische Ausnehmung
- 11: Rastelement
- 12: Ringnut

## Patentansprüche

1. Schaft eines Dentalwerkzeugs, welcher in eine Antriebseinrichtung einspannbar ist, mit einem distalen Endbereich (1), mit einem an dem distalen Endbereich (1) angrenzenden zylindrischen Schaftbereich (2), sowie mit einem dem distalen Endbereich (1) gegenüberliegenden, proximalen Endbereich (3), **dadurch gekennzeichnet, dass** der proximale Endbereich mit einem Mehrkantprofil (4) versehen ist, welches sich in Richtung des distalen Endbereichs (1) konisch verjüngt, welches an ein Werkzeugteil (5) angrenzt, und durch welches ein Drehmoment auf den Schaft einleitbar ist.

2. Schaft nach Anspruch 1, **dadurch. gekennzeichnet, dass** die Flanken des Mehrkantprofils (4) zur Mittelachse (6) des Schafts geneigt angeordnet sind.

3. Schaft nach einem der Ansprüche 1 oder 2, **dadurch gekennzeichnet, dass** das Mehrkantprofil (4) als Sechskantprofil ausgebildet ist.

4. Schaft nach einem der Ansprüche 1 bis 3, **dadurch gekennzeichnet, dass** der Werkzeugteil (5) als Implantatbettbohrer ausgebildet ist.

5. Schaft nach einem der Ansprüche 1 bis 3, **dadurch gekennzeichnet, dass** der Werkzeugteil (5) in Form eines im Wesentlichen rohrförmigen Verlängerungsansatzes (7) ausgebildet ist.

6. Schaft nach Anspruch 5, **dadurch gekennzeichnet, dass** der rohrförmige Verlängerungsansatz (7) an seinem freien Endbereich mit einer Innenkontur (8) in Form eines sich konisch verjüngenden Innen-Mehrkantprofils versehen ist.

7. Schaft nach einem der Ansprüche 1 bis 6, **dadurch gekennzeichnet, dass** am distalen Endbereich (1) eine Ringnut (12) ausgebildet ist.

8. Schaft nach einem der Ansprüche 1 bis 7, **dadurch gekennzeichnet, dass** das Mehrkantprofil (4) über seine gesamte Länge konisch ausgebildet ist.

9. Schaft nach einem der Ansprüche 1 bis 7, **dadurch gekennzeichnet, dass** das Mehrkantprofil (4) über einen Teil seiner Länge konisch ausgebildet ist.

## Claims

1. Shaft of a dental tool which can be clamped into a driving device, having a distal end area (1), a cylindrical shaft area (2) adjoining the distal end area (1) as well as a proximal end area (3) located opposite the distal end area (1), **characterized in that** the proximal end area is provided with a polygonal profile (4) which tapers off conically in the direction towards the distal end area (1)), which adjoins a tool part (5) and through which a torque can be introduced into the shaft.

2. Shaft according to claim 1, **characterized in that** the flanks of the polygonal profile (4) are arranged so as to be tilted with respect to the central axis (6).

3. Shaft according to any of the claims 1 or 2, **characterized in that** the polygonal profile (4) is formed as a hexagonal profile.

4. Shaft according to any of the claims 1 to 3, **characterized in that** the tool part (5) is formed as an implant bed drill.

5. Shaft according to any of the claims 1 to 3, **characterized in that** the tool part (5) is formed in the shape of a substantially tubular lengthening extension (7).

6. Shaft according to claim 5, **characterized in that**, at its free end area, the tubular lengthening extension (7) is provided with an inner contour (8) in the form of a conically tapering internal polygonal profile.

7. Shaft according to any of the claims 1 to 6, **characterized in that** an annular groove (12) is formed at the distal end area (1).

8. Shaft according to any of the claims 1 to 7, **characterized in that** the polygonal profile (4) is formed to be conical across its entire length.

9. Shaft according to any of the claims 1 to 7, **characterized in that** the polygonal profile (4) is formed to be conical across a portion of its length.

## Revendications

1. Manche d'un instrument dentaire, lequel peut être enserré dans une direction d'entraînement, avec une zone d'extrémité distale (1), avec une zone de manche (2) cylindrique jouxtant la zone d'extrémité distale (1), ainsi qu'avec une zone d'extrémité proximale (3) faisant face à la zone d'extrémité distale (1), **caractérisé en ce que** la zone d'extrémité proximale est pourvue d'un profil polygonal (4), lequel se rétrécit de manière conique en direction de la zone d'extrémité distale (1), lequel jouxte une partie d'outil (5), et par lequel un couple de rotation peut être imprimé sur le manche.

2. Manche selon la revendication 1, **caractérisé en ce que** les flancs du profil polygonal (4) sont disposés de manière inclinée par rapport à l'axe médian (6) du manche.

3. Manche selon l'une quelconque des revendications 1 ou 2, **caractérisé en ce que** le profil polygonal (4) est réalisé sous la forme d'un profil hexagonal.

4. Manche selon l'une quelconque des revendications 1 à 3, **caractérisé en ce que** la partie d'outil (5) est réalisée sous la forme d'un foret de lit implantaire.

5. Manche selon l'une quelconque des revendications 1 à 3, **caractérisé en ce que** la partie d'outil (5) est réalisée sous la forme d'un appendice de prolongement (7) sensiblement de forme tubulaire.

6. Manche selon la revendication 5, **caractérisé en ce que** l'appendice de prolongement (7) de forme annulaire est pourvu au niveau de sa zone d'extrémité libre d'un contour intérieur (8) sous la forme d'un profil polygonal intérieur se rétrécissant de manière conique.

7. Manche selon l'une quelconque des revendications 1 à 6, **caractérisé en ce qu'**une rainure annulaire (12) est réalisée au niveau de la zone d'extrémité distale (1).

8. Manche selon l'une quelconque des revendications 1 à 7, **caractérisé en ce que** le profil polygonal (4) est réalisé de manière conique sur toute sa longueur.

9. Manche selon l'une quelconque des revendications 1 à 7, **caractérisé en ce que** le profil polygonal (4) est réalisé de manière conique sur une partie de sa longueur.
